# EUROPEAN PATENT APPLICATION

(11) **EP 4 385 735 A1**
(43) Date of publication of application: **19.06.2024**
(21) Application number: 22306844.6
(22) Date of filing: 12.12.2022
(51) Int. Cl.: B33Y 10/00, B33Y 30/00, B29D 11/00, B29C 64/112

(54) **METHOD FOR ADDITIVELY MANUFACTURING AN OPHTHALMIC DEVICE AND MANUFACTURING SYSTEM CONFIGURED TO CARRY OUT SUCH A METHOD**

(71) Applicant: Essilor International, 94220 Charenton-Le-Pont (FR)
(72) Inventor: LEITE, Pierre, 91650 Breuillet (FR); QUERE, Loïc, 94210 La Varenne Saint-Hilaire (FR)
(74) Representative: Santarelli

(57) **Abstract**

The disclosure provides a method for additively manufacturing an ophthalmic device comprising providing a starting optical member (5) and inkjet printing a complementary optical member (10) on the starting optical member thanks to at least one inkjet print head (6) having a plurality of nozzles configured to project a volume of a predetermined material, wherein inkjet printing comprises tilting the at least one inkjet print head relative to the starting optical member and/or rotating the starting optical member during inkjet printing.

## Description

### FIELD OF THE DISCLOSURE

The disclosure relates to a method for additively manufacturing an ophthalmic device and a manufacturing system configured to carry out such a method.

The disclosure also relates to a command and control unit including system elements configured to run a computer program in order to implement at least some steps of the additive manufacturing method, and to a manufacturing system comprising such a command and control unit and configured for carrying out such a method.

The disclosure also relates to a computer program including instructions configured to implement the additive manufacturing of such a method, when said computer program is run by a computer, and to a client-server communication interface for transferring to a remote computer at least manufacturing data which are determined by a computer program that implements at least some parts of such a method, when said computer program is run in a command and control unit, the remote computer implementing the other parts of such method.

### BACKGROUND ART

It is known to use an additive manufacturing technology to manufacture an ophthalmic device, such as spectacle lenses.

Known methods for additively manufacturing of ophthalmic lenses, such as stereolithography and its variants, comprise curing steps and layering steps which are performed successively in a manufacturing system which comprises a curing device, a layering device and a building platform located in relation to a vat filled with a predetermined material.

For instance, each ophthalmic lens is built layer by layer on the building platform which is movable relative to the vat including a volume of the predetermined material. The building platform is located in a predetermined position, the curing device including an irradiation source performs the curing step of a first layer of material, the layering device performs the layering step at least thanks to a displacement of the building platform so that a novel layer of material having a predetermined thickness can be cured, etc.

In other words, in such known methods, a curing step is performed on a layer which is for instance liquid for the plurality of ophthalmic lenses to be manufactured on the building platform. The liquid layer is thus hardened and next a layering step is performed for forming a new liquid layer on the previous hardened layer of the plurality of ophthalmic lenses to be manufactured.

Another method of additive manufacturing may comprise successively depositing droplets of liquid material and curing them forming layers of material. This method, usually called 3D-printing, or inkjet printing, generally controls the shape of the layers by controlling the position and volume of the deposited droplets whereas the curing step is usually global. Other additive manufacturing method may also be used.

Manufacturing a complete optical lens layer by layer by additive manufacturing may be time consuming in view of mass production of articles.

In this respect, a so-called "build over technology" can be useful to reduce time of manufacturing. Such a build over technology is disclosed for instance in international applications WO2015004383A1 and WO2020115061A1, wherein at least one complementary optical member is adjoined by additively manufacturing to a starting optical member.

There is thus a need to provide a method for additively manufacturing an ophthalmic device, by building-over and inkjet-printing.

### SUMMARY OF THE DISCLOSURE

The disclosure is directed to a method for additively manufacturing an ophthalmic device, for instance by building-over and inkjet-printing, which is simple and convenient to carry out.

The disclosure accordingly provides a method for additively manufacturing an ophthalmic device comprising a step of providing a starting optical member and a step of inkjet printing a complementary optical member on the starting optical member thanks to at least one inkjet print head having a plurality of nozzles configured to project a volume of a predetermined material, wherein the step of inkjet printing comprises a step of tilting the at least one inkjet print head and the starting optical member one relative to each other and/or a step of rotating the starting optical member during inkjet printing.

Thanks to the method according to the disclosure, it is possible to print a large number of complementary optical members having different geometrical characteristics, including diameter or profile, on a given number of starting optical members.

In other words, compared to the known solutions described above, the method according to the disclosure allows to print on a larger surface of a given starting optical member.

More generally, the method according to the disclosure allows to use the technology of 3D-inkjet print for manufacturing pseudo-spherical substrates having different geometrical characteristics, including diameter or profile, on a number of what one can equate to substrate or "standard" blanks easily made in mass production.

In other words, it is possible to print any ophthalmic devices formed by the combination of customized complementary optical members and standard blanks, or substrates.

Therefore, the method according to the disclosure allows to perform a personalized final ophthalmic device on the basis of a standard blank in a particularly convenient manner.

Of course, the substrate or standard blank may have simple or complex surface(s), and for instance curve and/or convex surface(s).

In the embodiment according to which both tilting the at least one inkjet print head and the starting optical member one relative to each other and rotating the starting optical member during inkjet printing are carried out, it is also possible to print on large number of starting optical members compared to the known methods. Indeed it is thus possible to print on starting optical members with different convex curvatures.

Starting optical member may be formed by an ophthalmic member as such, that is to say a part of the final ophthalmic device equated to a blank as described above; or by a part intended to be used for the manufacturing of the final ophthalmic device, that is to say for instance a mold on a surface of which is printed the complementary optical member and into which the blank is then molded or casted or injected.

In variant, the complementary optical member is removed from the mold and then assembled with a substrate or standard blank.

This is due to one or the combination of the rotation of the starting optical member and of the tilt of the at least one inkjet print head relative to the starting optical member.

In the method according to the disclosure, the starting optical member may rotate during inkjet printing. The movement of rotation can be continuous during the method. The movement rotation is not used to set the starting optical member in a fixed position before carrying out the inkjet printing, but to provide a rotation of the starting optical member during the deposition of droplets of material.

The tilt of the at least one inkjet print head and the starting optical member one relative to each other may comprise the tilt of the inkjet print head relative to the starting optical member, or the tilt of the starting optical member relative to the inkjet print head or the tilt of both of them.

Advantageous and convenient features of the manufacturing method are described below.

The starting optical member rotates around a rotation axis and has an upper surface, such as a convex surface, above which is facing the at least one inkjet print head, the latter being inclined relative to the rotations axis.

The method comprises a step of determining at least one tilt angle of the at least one inkjet print head at least as a function of the predetermined material and/or of geometrical characteristics of the starting optical member and/or of the complementary optical member to manufacture in order to obtain the ophthalmic device.

The at least one tilt angle of the at least one inkjet print head can also be predetermined.

The step of inkjet printing comprises a step of locating the at least one inkjet print head at a distance value selected among a plurality of distance values from the starting optical member.

The distance value is choosen in a manner that the inkjet print head can project droplets on different working zones on the starting optical member, thus allowing to use a larger surface on a given starting optical member.

The at least one inkjet print head can also be located a predetermined distance value.

The method comprises a step of determining at least one location of the at least one inkjet print head relative to the starting optical member at least as a function of the predetermined material and/or of geometrical characteristics of the starting optical member and/or of the complementary optical member to manufacture in order to obtain the ophthalmic device.

The distance value is comprised between a minimum height according to which the predetermined material is able to forms droplets and a maximum height according to which the droplets predetermined material are deposited accurately on the starting optical member.

A droplet is here considered as being a volume of material devoid of tail or satellite.

The step of inkjet printing comprises a first sequence according to which the at least one inkjet print head is tilted and/or located in a first position relative to the starting optical member in order to print a first part of the complementary optical member on a first portion of the starting optical member, and a second sequence according to which the at least one inkjet print head is tilted and/or located in a second position relative to the starting optical member in order to print a second part of the complementary optical member on a second portion of the starting optical member.

The second portion may be at least partially distinct to the first portion.

In variant, the second portion may be at least partially similar to the first portion so that the droplets projected during the second sequence are deposited on droplets deposited during the first sequence.

The step of inkjet printing may be made thanks to a plurality of inkjet print heads having each a plurality of nozzles and being each tilted and/or located in a respective determined position relative to the starting optical member.

For instance, the inkjet print heads may have a similar or different tilt angles and may be located symmetrically or asymmetrically as regards a plan through a rotation axis of the starting optical member.

For instance, the inkjet print heads may have different tilt angles and may be located on a same side of a plane through a rotation axis of the starting optical member.

For instance, the distance values between each inkjet print head and the starting optical member may be similar or different.

The method may comprise a step of determining a manufacturing configuration including operational parameters such as tilt angle and/or location and/or print resolution of the at least one inkjet print head and/or rotation speed of the starting optical member, at least as a function of the predetermined material and/or of geometrical characteristics of the starting optical member and/or of the complementary optical member to manufacture in order to obtain the ophthalmic device and/or of an optical function of the ophthalmic device to manufacture.

The print resolution comprises a process resolution corresponding to an angular resolution which is defined at least as a function of the rotation speed of the starting optical member and of nozzles firing frequency, and a print head resolution corresponding to a radial resolution of the print head which is defined at least as a function of a number and an arrangement of the nozzles.

The manufacturing configuration comprises several sequences for each of which some nozzles are activated and some nozzles are deactivated.

At least a sequence may correspond to at least one revolution of the starting optical member, or to less than one revolution of the starting optical member.

The disclosure also provides, according to a second aspect, a command and control unit including system elements configured to run a computer program in order to implement at least some of the steps of the additive manufacturing method as described above for manufacturing an ophthalmic device.

The disclosure further provides, according to a third aspect, a manufacturing system comprising an inkjet printer comprising at least one inkjet print head having a plurality of nozzles and a command and control unit as described above, the system being configured for carrying out the steps of the additive manufacturing method as described above.

The disclosure also provides, according to a fourth aspect, a computer program including instructions configured to implement at least some of the steps of the additive manufacturing method as described above, when said computer program is run by a computer.

The disclosure further provides, according to a fifth aspect, a client-server communication interface for transferring to a remote computer at least manufacturing data, such as such as tilt angle and/or rotation speed, which are determined by a computer program that implements at least some steps of the method for additively manufacturing an ophthalmic device as described above, when said computer program is run in a command and control unit, the remote computer implementing the other steps of such additive manufacturing method.

### BRIEF DESCRIPTION OF THE DRAWINGS

The description of the disclosure now continues with a detailed description of embodiments given hereinafter by way of non-limiting example and with reference to the appended drawings.
Figure 1 is a schematic view of a manufacturing system configured to carry out a method for additively manufacturing ophthalmic devices.
Figure 2 diagrammatically shows a client-server communication interface comprising system parts configured for transferring at least one configuration parameter determined by the method according to the disclosure to a remote data processing system.
Figure 3 is a block diagram showing steps of the method for additively manufacturing an ophthalmic device according to the disclosure.
Figure 4 is a schematic view showing the method carried out according to a first embodiment.
Figures 5 and 6 are schematic views showing the method carried out according to a second embodiment.
Figures 7 and 8 are schematic views showing the method carried out according to a variant of the second embodiment.
Figure 9 is a schematic view showing the method carried out according to a third embodiment.
Figure 10 is a schematic view showing the method carried out according to a fourth embodiment.

### DETAILED DESCRIPTION OF EXAMPLE EMBODIMENTS

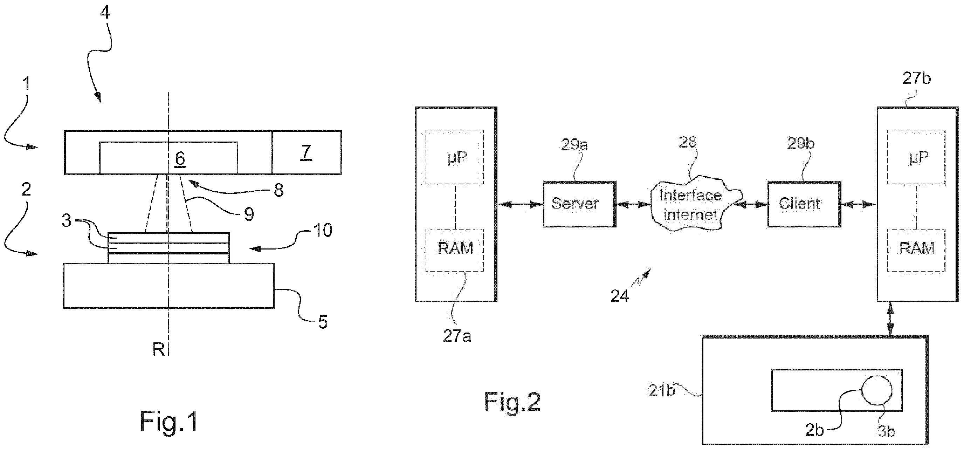

Figure 1 illustrates schematically a manufacturing system 1 configured to carry out a method for additively manufacturing ophthalmic devices 2.

In the illustrated embodiment, the manufacturing system 1 is an additive system configured for manufacturing the ophthalmic devices 2 layer by layer, each layer 3 being formed by a volume of the predetermined material 11 at least partially polymerized and hardened.

In this respect, the manufacturing system 1 comprises an additive unit also called additive manufacturing module, and here formed by an inkjet printer 4 which is configured for projecting a volume of a predetermined material in the shape of droplets.

The predetermined material is suitable for manufacturing ophthalmic devices 2, such as a liquid resin for making eyeglasses.

The inkjet printer 4 comprises one or a plurality of inkjet print heads 6 having each a plurality of nozzles from which the predetermined material is projected in droplets.

A droplet is here considered as being a volume of material devoid of tail or satellite.

Each print head 6 has a predetermined number of nozzle(s) and a predetermined arrangement thereof. The nozzles can be activated or deactivated.

The inkjet printer 4 may further comprise a command and control unit 7 including system elements configured to run a computer program including instructions configured to implement at least some steps of the additive manufacturing method according to the disclosure for manufacturing the ophthalmic device 2.

The command and control unit 7 may be configured to command and control the print head(s) 6 and in particular, a print head resolution corresponding to a radial resolution of the print head(s) 6 which is defined at least as a function of the number and the arrangement of the nozzles.

The command and control unit 7 may be configured to command and control activation and/or deactivation of each nozzle and also each nozzle firing frequency if any.

The nozzle firing frequency can be variable or fixed.

The nozzle firing frequency may depend at least on geometrical characteristics of the starting optical member 5 ad/or on geometrical characteristics of the complementary optical member and/or on the rotation speed of the starting optical member and/or on the location, including tilting and radial shifting relative to the rotation axis, of the print head(s).

The command and control unit 7 may be configured to command and control a location of the print head(s) 6.

The inkjet printer 4 is here located on an upper side of a starting optical member 5 and is configured to build over a complementary optical member 10, formed by the layers 3, on the starting optical member 5.

In other words, the starting optical member 5 may have an upper surface, such as a convex surface, above which is facing the print head(s) 6.

The command and control unit 7 may be configured to locate the print head(s) 6 at a distance value selected among a plurality of distance values from the starting optical member 5.

The distance value is comprised between a minimum height according to which the predetermined material is able to forms droplets and a maximum height according to which the droplets predetermined material are deposited accurately on the starting optical member 5.

The starting optical member 5 is here able to rotate around a rotation axis R and the print head(s) 6 and the starting optical member 5 are able to be inclined one relative to each other and/or the print head(s) 6 are able to be inclined relative to the rotation axis R.

In this respect, the command and control unit 7 may also be configured to command and control a tilt angle of the print head(s) 6 and the starting optical member one 5 one relative to each other, and a rotation speed of the starting optical member 5 around the rotation axis R.

In addition, the command and control unit 7 may be configured to command and control a print resolution of the print head(s) 6, which comprises a process resolution corresponding to an angular resolution which is defined at least as a function of the rotation speed of the starting optical member 5 and of nozzles firing frequency, and the print head resolution as defined above.

For instance, the ophthalmic device 2 which is obtained can be the combination of the complementary optical member 10 and the starting optical member 5 if the latter forms a substrate or standard blank itself.

In variant, the starting optical member can be a part of a molding device and the complementary optical member can be built over the molding device and then removed from the starting optical member and then assembled with a separate standard blank.

In another variant, the starting optical member can be a part of the molding device, the complementary optical member is built over the part of the molding device and then the standard blank is molded, casted or injected directly in the molding device and on complementary optical member.

In another variant, the starting optical member can be a part of the molding device, the complementary optical member is built over the part of the molding device and is formed to be able to be mounted directly in a pair of eyeglasses' frame.

Figure 2 shows a client-server communication interface 24 comprising for instance a so-called supplier side 29a and another, so-called client side 29b, and these two sides communicating via an internet interface 28.

The supplier side comprises a server 29a linked to a data processing system or a command and control unit 27a of the same type as the command and control unit 7 disclosed in Figure 1, this server 29a being configured to communicate with the internet interface 28.

The client side 29b is configured to communicate with the internet interface 28, and is linked to a data processing system or a command and control unit 27b of the same type as that of the supplier side.

Furthermore, the command and control unit 27b on the client-side is linked to a manufacturing system 1b of the same type as that in Figure 1 for manufacturing an ophthalmic device 2b layer 3b by layer 3b.

For instance, the command and control unit 27b on the client-side is configured for receiving by a user some parameters about the ophthalmic device to be machined, about the inkjet printer 4 and about the manufacturing method intended to be implemented for additively manufacturing the ophthalmic device 2b.

The command and control unit 27b on the client-side, using the internet 28 and server 29a interface, sends the data received to the command and control unit 27a on the supplier-side for the determination of a manufacturing file and operational parameters.

The command and control unit 27a on the supplier-side executes the computer program that it contains in order to implement some steps of the method for additively manufacturing the ophthalmic device.

Using the server 29a and the internet interface 28, the command and control unit 27a on the supplier-side sends the manufacturing file and operational parameters, to the command and control unit 27b on the client side.

The command and control unit 27b on the client side is here configured to execute software for implementing the other steps of the method for additively manufacturing the ophthalmic device.

In variant, the manufacturing system can be located on the supplier side so that the command and control unit on the supplier side is configured both to determine the manufacturing file and operational parameters and to additively manufacture the ophthalmic device.

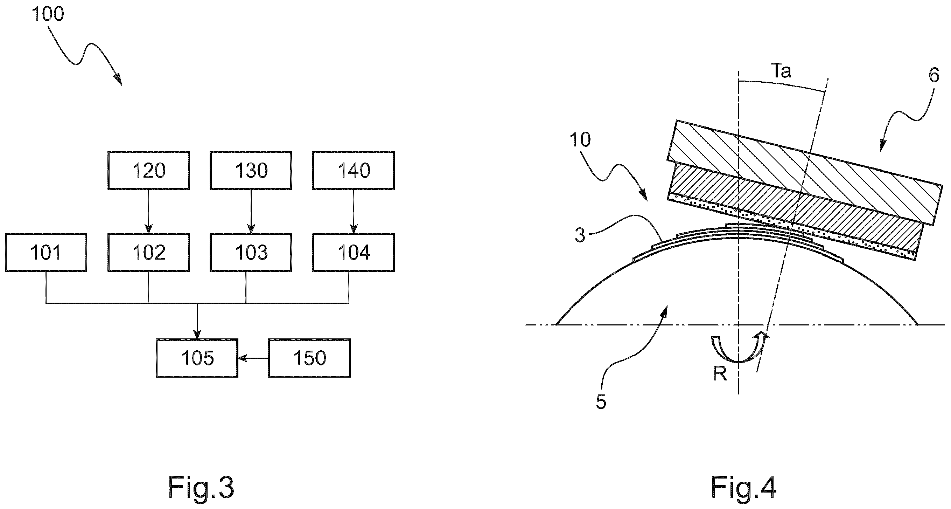

Figure 3 is a block diagram showing the main steps of the method 100 for additively manufacturing ophthalmic devices 2 carried out thanks to the manufacturing system 1 as described above.

The method comprises a step 101 of providing the starting optical member 5.

The method may comprise the following steps:
- providing geometrical characteristics of the starting optical member 5;
- providing geometrical characteristics of the complementary optical member 10 to manufacture in order to obtain the ophthalmic device 2;
- providing parameters of the predetermined material; and/or
- providing an optical function of the ophthalmic device 2 to manufacture.

The method further comprises a step 102 of rotating the starting optical member 5.

The method may also previously comprise a step 120 of determining rotation speed of the starting optical member 5, at least as a function of the predetermined material and/or of geometrical characteristics of the starting optical member 5 and/or of the complementary optical member 10 to manufacture in order to obtain the ophthalmic device 2 and/or of the optical function of the ophthalmic device 2 to manufacture.

The method further comprises a step 103 of tilting the inkjet print head(s) 6 and the starting optical member 5 one relative to each other.

The method may also previously comprise a step 130 of determining at least one tilt angle of the inkjet print head(s) 6 at least as a function of the predetermined material and/or of geometrical characteristics of the starting optical member 5 and/or of the complementary optical member 10 to manufacture in order to obtain the ophthalmic device 2.

The tilt of the inkjet print head(s) 6 and the starting optical member 5 one relative to each other may comprise the tilt of the inkjet print head(s) 6 relative to the starting optical member 5, or the tilt of the starting optical member 5 relative to the inkjet print head(s) 6 or the tilt of both of them.

The method further comprises a step 104 of locating the inkjet print head(s) 6 at a distance value selected among a plurality of distance values from the starting optical member 5.

The method may also previously comprise a step 140 of determining at least one location of the inkjet print head(s) 6 relative to the starting optical member 5 at least as a function of the predetermined material and/or of geometrical characteristics of the starting optical member 5 and/or of the complementary optical member 10 to manufacture in order to obtain the ophthalmic device 2.

The method further comprises a step 105 of inkjet printing the complementary optical member 10 in build-over mode on the starting optical member 5.

The method may also previously comprise a step 150 of determining the print resolution of the inkjet print head(s) 6, at least as a function of the predetermined material and/or of geometrical characteristics of the starting optical member 5 and/or of the complementary optical member 10 to manufacture in order to obtain the ophthalmic device 2 and/or of the optical function of the ophthalmic device 2 to manufacture, the print resolution being defined as explained above.

In other words, the method may comprise a step of determining a manufacturing configuration including operational parameters such as the tilt angle of the inkjet print head(s) 6 determined in step 130 and/or location of the inkjet print head(s) 6 determined in step 140 and/or the print resolution of the inkjet print head(s) 6 determined in step 150 and/or the rotation speed of the starting optical member 5 determined in step 120.

It is to be noted that the step 105 of inkjet printing may comprise a manufacturing configuration having one or several sequences.

For instance, the step 105 of inkjet printing may comprise at least a first sequence according to which the inkjet print head(s) 6 is tilted and/or located in a first position relative to the starting optical member 5 in order to print a first part of the complementary optical member 10 on a first portion of the starting optical member 5, and then at least a second sequence according to which the inkjet print head(s) 6 is tilted and/or located in a second position relative to the starting optical member 5 in order to print a second part of the complementary optical member 10 on a second portion of the starting optical member 5.

The second portion may be at least partially distinct or at least partially similar to the first portion.

The first and second sequences can be carried out sequentially or simultaneously by several inkjet print head(s) 6.

The manufacturing configuration may thus comprise several sequences for each of which some nozzles are activated and some nozzles are deactivated.

At least a sequence may correspond to at least one revolution of the starting optical member 5, or to less than one revolution of the starting optical member 5.

Of course, between two sequences, the print head(s) can be radially displaced relative to the rotation axis of the staring optical member 5.

In an embodiment, two print heads can be arranged with different tilt angles with regard to the starting optical member and with a radial shift with regard to each other.

Figure 4 shows the starting optical member 5 which rotates and the inkjet print head 6 which is tilted by a tilt angle Ta relative to the rotation axis of the starting optical member 5 and which is located at a fixed distance from the starting optical member 5, so that to project material onto the starting optical member 5 and form layers 3 in order to build the complementary optical member 10 over the starting optical member 5.

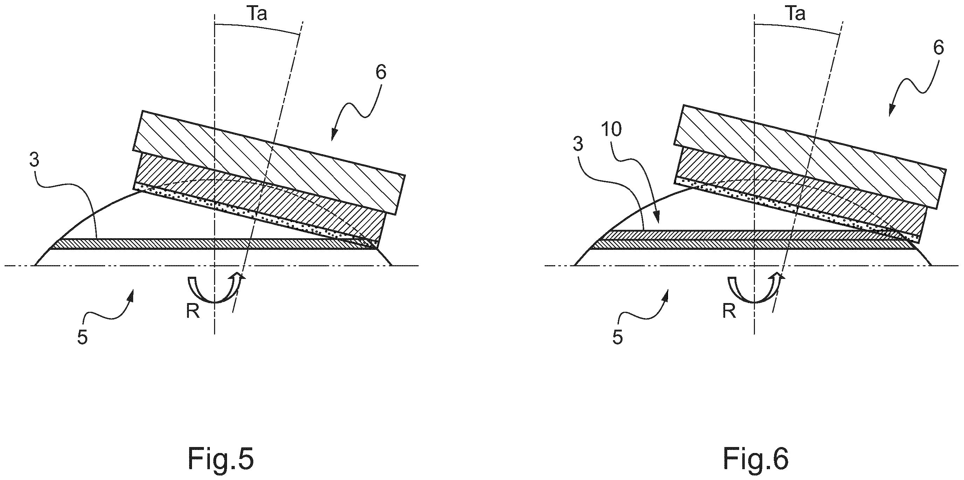

Figures 5 and 6 show the starting optical member 5 which is configured to rotate and the inkjet print head 6 which is tilted by the tilt angle Ta relative to the rotation axis of the starting optical member 5 and which is located at a variable distance from the starting optical member 5, so that to project material and form layers 3 in order to build the complementary optical member 10 over the starting optical member 5. In Figure 5, the inkjet print head 6 is at a first distance from the starting optical member 5 and forms a first layer and in Figure 6, the inkjet print head 6 is at a second distance from the starting optical member 5 greater than the first distance and forms a second layer upper than the first layer on the starting optical member 5.

The second layer is here added on a portion of the starting optical member which is not layered yet.

In variant, the second layer can be added at least partially on a part of the first layer.

Figures 5 and 6 thus show that by varying the distance it is possible to inkjet print a larger area over the starting optical member 5, for instance as compared to having a print head rotating at a fixed distance from the starting optical member 5 and depositing ink only in parts of the starting optical member being within a given distance from the print head.

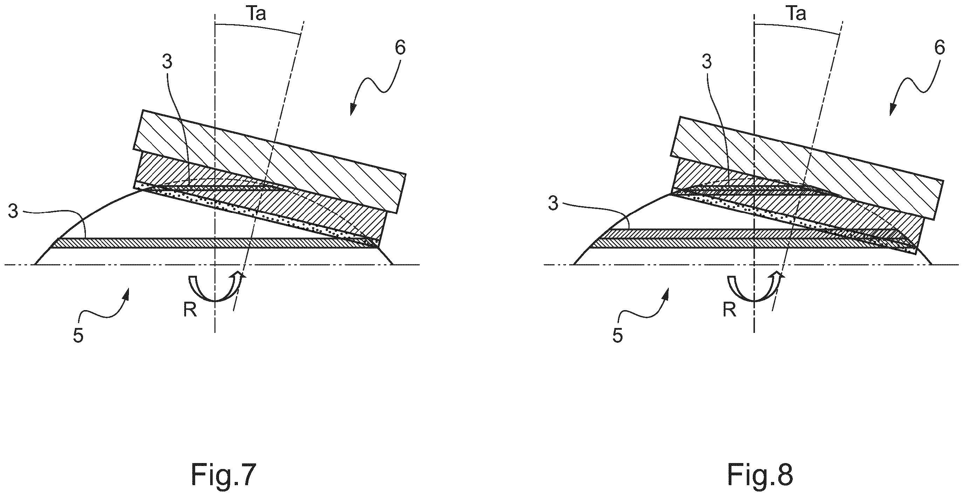

Figures 7 and 8 are similar to Figures 5 and 6 except that more nozzles of the print head 6 are activated than in Figures 5 and 6.

Consequently, a plurality of layers 3 can be formed simultaneously on different portions of the starting optical member 5.

In an embodiment, at least one layer can cover part of itself in a spiral fashion.

Figures 7 shows that layers 3 are formed on both lower and upper sides of the starting optical member 5 when the print head 6 is located at the first distance from the starting optical member 5, and Figure 8 shows that other layers 3 are formed also on both lower and upper sides of the starting optical member 5 when the print head 6 is located at the second distance from the starting optical member 5.

In the present disclosure, even if two portions of the starting optical member 5 which are layered are remote one to the other, that is to say not adjacent and in contact, the print resolution may take into consideration any location of the starting optical member and any layer already printed at a given distance, in order to proceed to the deposition of subsequent layer(s) of material.

Figures 7 and 8 thus show that by varying the distance and multiplicating the activation of nozzles, it is possible to inkjet print more quickly a larger area over the starting optical member 5 and also different portions simultaneously.

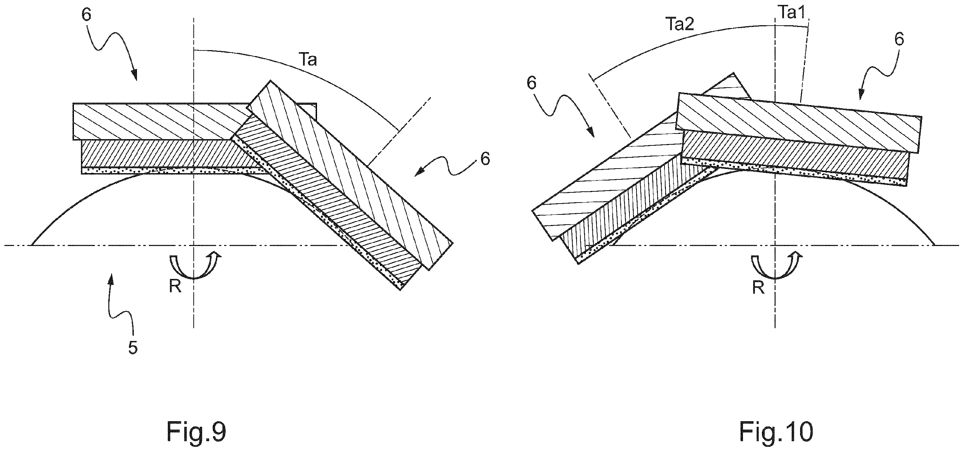

In the embodiment of Figure 9, the inkjet printer includes two print heads 6, one of which being tilted of a tilt angle Ta relative to the starting optical member 5, and the other of which not being tilted and being thus disposed substantially perpendicular to the rotation axis R around which is rotated the starting optical member 5.

In the embodiment of Figure 10, the inkjet printer also includes two print heads 6, one of which being tilted of a first tilt angle Ta1 relative to the starting optical member 5, and the other if being tilted of a second tilt angle Ta2 relative to the starting optical member 5 which is distinct to the first tilt angle Ta1.

More generally, inkjet printing may be made thanks to one or more inkjet print heads 6 having each a plurality of nozzles and being each tilted and/or located in a respective determined position relative to the starting optical member 5.

For instance, the inkjet print heads 6 may have a similar or different tilt angles and may be located symmetrically or asymmetrically as regards a plan through the rotation axis R of the starting optical member 5.

Figure 10 shows two print heads 6 asymmetrically, one print head 6 being closer to the rotation axis R than the other print head 6.

In addition, the distances between each inkjet print head 6 and the starting optical member 5 may be similar or different.

Furthermore, the inkjet print heads 6 may have similar or different print head resolutions.

In a variant not illustrated, the inkjet print heads may be disposed symmetrically, with similar or distinct tilt angles.

In another variant not illustrated, the inkjet print heads may have different tilt angles and may be located on a same side of the plane through a rotation axis of the starting optical member.

In another not illustrated, the at least one inkjet print head can be curved and the arrangement of nozzles is adapted so that direct the droplets on the starting optical member.

Thanks to the method according to the disclosure, it is possible to print a large number of complementary optical members having different geometrical characteristics, including diameter or profile, on a given number of starting optical members.

In other words, compared to the known solutions described above, the method according to the disclosure allows to print on a larger surface of a given starting optical member.

More generally, the method according to the disclosure allows to use the technology of 3D-inkjet print for manufacturing pseudo-spherical substrates having different geometrical characteristics, including diameter or profile, on a number of what one can equate to substrate or "standard" blanks easily made in mass production.

In other words, it is possible to print any ophthalmic devices formed by the combination of customized complementary optical members and standard blanks, or substrates.

Therefore, the method according to the disclosure allows to perform a personalized final ophthalmic device on the basis of a standard blank in a particularly convenient manner.

Of course, the substrate or standard blank may have simple or complex surface(s), and for instance curve and/or convex and/or pseudo-spherical surface(s).

In the embodiment according to which both tilting the at least one inkjet print head and the starting optical member one relative to each other and rotating the starting optical member during inkjet printing are carried out, it is also possible to print on large number of starting optical members compared to the known methods.

For instance, it is possible to manufacture by build over and inkjet printing either an ophthalmic device having a low optical lower or an ophthalmic device having a high or very high optical lower.

In other words, it is possible to manufacture by build over and inkjet printing either an ophthalmic device having either a low base curvature or a high or very high base curvature.

The complementary optical member can be equated to a patch on the starting optical member.

However in some embodiments, contrarily to a patch manufactured elsewhere and added to the starting optical member, the patch may be manufactured directly onto the starting optical member.

The starting optical member may be formed by an ophthalmic member as such, that is to say a part of the final ophthalmic device equated to a blank as described above; or by a part intended to be used for the manufacturing of the final ophthalmic device, that is to say for instance a mold on a surface of which is printed the complementary optical member and into which the blank is then molded or casted or injected. In variant, the complementary optical member is removed from the mold and then assembled with a standard blank.

In a variant, the starting optical member may be an ophthalmic member as such but not have a surface smoothness compatible with an optical member. The deposition of ink for forming the complementary optical member may have properties enabling to hide the lack of smoothness. The lack of smoothness may be tailored to facilitate the deposition of printing ink for manufacturing the complementary optical member.

This is due to the combination of the rotation of the starting optical member and of the tilt of the at least one inkjet print head relative to the starting optical member.

In the method according to the disclosure, the starting optical member may rotate during inkjet printing. The movement of rotation can be continuous during the method, or at least one layer can cover part of itself in a spiral fashion. The movement rotation is not used to set the starting optical member in a fixed position before carrying out the inkjet printing, but to provide a rotation of the starting optical member during the deposition of droplets of material.

To be noted that the ophthalmic device can be an ophthalmic lens for spectacles lenses or other devices adapted for a wearer and having ophthalmic properties.

To be noted also that the additive manufacturing method can be carried out according to any existing suitable technology, such as for instance technologies included in the definition given by the reference ISO/ASTM 52900:2021, or corresponding references.

It should be noted more generally that the disclosure is not limited to the examples described and represented.

## Claims

1. Method for additively manufacturing an ophthalmic device (2) comprising providing (101) a starting optical member (5) and inkjet printing (105) a complementary optical member (10) on the starting optical member thanks to at least one inkjet print head (6) having a plurality of nozzles configured to project a volume of a predetermined material, wherein inkjet printing comprises tilting (103) the at least one inkjet print head and the starting optical member one to each other and/or rotating (102) the starting optical member during inkjet printing.

2. Method according to claim 1, wherein the starting optical member (5) rotates around a rotation axis (R) and has an upper surface, such as a convex surface, above which is facing the at least one inkjet print head (6), the latter being inclined relative to the rotations axis.

3. Method according to one of claims 1 and 2, comprising determining (130) at least one tilt angle of the at least one inkjet print head (6) at least as a function of the predetermined material and/or of geometrical characteristics of the starting optical member (5) and/or of the complementary optical member (10) to manufacture in order to obtain the ophthalmic device (2).

4. Method according to any one of claims 1 to 3, wherein inkjet printing (105) comprises locating (104) the at least one inkjet print head (6) at a distance value, selected among a plurality of distance values, from the starting optical member (5).

5. Method according to claim 4, comprising determining (140) at least one location of the at least one inkjet print head (6) relative to the starting optical member (5) at least as a function of the predetermined material and/or of geometrical characteristics of the starting optical member and/or of the complementary optical member (10) to manufacture in order to obtain the ophthalmic device (2).

6. Method according to any one of claims 1 to 5, wherein inkjet printing (105) comprises a first sequence according to which the at least one inkjet print head (6) is tilted and/or located in a first position relative to the starting optical member (5) in order to print a first part of the complementary optical member (10) on a first portion of the starting optical member, and a second sequence according to which the at least one inkjet print head is tilted and/or located in a second position relative to the starting optical member in order to print a second part of the complementary optical member on a second portion of the starting optical member.

7. Method according to claim 6, wherein the second portion is at least similar or at least distinct to the first portion.

8. Method according to any one of claims 1 to 7, wherein the inkjet printing (105) is made thanks to a plurality of inkjet print heads (6) having each a plurality of nozzles and being each tilted and/or located in a respective determined position relative to the starting optical member (5).

9. Method according to any one of claims 1 to 8, comprising determining a manufacturing configuration including operational parameters such as tilt angle and/or location and/or print resolution of the at least one inkjet print head (6) and/or rotation speed of the starting optical member (5), at least as a function of the predetermined material and/or of geometrical characteristics of the starting optical member and/or of the complementary optical member (10) to manufacture in order to obtain the ophthalmic device (2) and/or of an optical function of the ophthalmic device to manufacture.

10. Method according to claim 9, wherein the print resolution comprises a process resolution corresponding to an angular resolution which is defined at least as a function of the rotation speed of the starting optical member (5) and of nozzles firing frequency, and a print head resolution corresponding to a radial resolution which is defined at least as a function of a number and an arrangement of the nozzles.

11. Method according to one of claim 9 and 10, wherein the manufacturing configuration comprises several sequences for each of which some nozzles are activated and some nozzles are deactivated, and wherein at least a sequence corresponds to at least one revolution of the starting optical member (5), or to less than one revolution of the starting optical member.

12. A command and control unit including system elements configured to run a computer program in order to implement an additive manufacturing method according to any one of claims 1 to 11, for manufacturing an ophthalmic device (2).

13. A manufacturing system comprising an inkjet printer (4) comprising at least one inkjet print head (6) having a plurality of nozzles and a command and control unit (7) according to claim 12, the system being configured for carrying out such additive manufacturing method.

14. Computer program including instructions configured to implement at least part of an additive manufacturing method according to any one of claims 1 to 11, when said computer program is run by a computer.

15. Client-server communication interface for transferring to a remote computer at least manufacturing data, such as tilt angle and/or rotation speed, which are determined by a computer program that implements at least a part of the method for additively manufacturing an ophthalmic device (2) according to any one of claims 1 to 11, when said computer program is run in a command and control unit, the remote computer implementing the other steps of such additive manufacturing method.
